# EUROPÄISCHE PATENTSCHRIFT

(11) **EP 0 531 669 B1**
(45) Veröffentlichungstag und Bekanntmachung des Hinweises auf die Patenterteilung: **30.08.1995**
(21) Anmeldenummer: 92112216.4
(22) Anmeldetag: 17.07.1992
(51) Int. Cl.: B65G 1/127

(54) **Lageranordnung für Lagergut**
Storage arrangement for storing goods
Arrangement d'entrepôt pour marchandises

(30) Priorität: 13.09.1991 DE 9111388 U
(43) Veröffentlichungstag der Anmeldung: 17.03.1993
(73) Patentinhaber: Herbert Zippel Moosbach, Inh. Peter Dinzl, D-92709 Moosbach (DE)
(72) Erfinder: Rogic, Vladimir, D-70372 Stuttgart (DE)
(74) Vertreter: Rotermund, Hanns-Jörg, Dipl.-Phys.

(56) Entgegenhaltungen:
- DE-A- 2 242 322

## Beschreibung

Die Erfindung betrifft eine Lageranordnung für Lagergut, mit zumindest einem Paternosterlager, welches mehrere Tragsätze für Lagergut aufweist, die als Teile eines umlaufend beweglichen Paternosters angeordnet und an einer durch Umlauf des Paternosters erreichbaren Be- bzw. Entladestelle des Paternosterlagers be- bzw. entladbar sind.

Paternosterlager sind allgemein bekannt und zeichnen sich durch eine hohe Lagerkapazität sowie die Möglichkeit eines schnellen und bequemen Zugriffes auf das Lagergut aus.

Allerdings steigt der Aufwand für die Erstellung eines Paternosterlagers recht erheblich, wenn die Tragsätze sehr schweres Lagergut aufnehmen müssen. In solchen Fällen ist es bislang regelmäßig erforderlich, das Paternosterlager so auszubilden, daß alle Tragsätze gleichzeitig mit schwerem Lagergut belastet sein dürfen. Gleichwohl ist es nicht ohne weiteres möglich, einerseits in einigen Tragsätzen sehr schweres Lagergut und in anderen Tragsätzen leichteres Lagergut unterzubringen bzw. einige Tragsätze vorübergehend leerzulassen. Bei falscher Verteilung der schwerbelasteten Tragsätze können sich beim Umlauf des Paternosters erhebliche Unlasten ergeben, die zu einer Überlastung der zum Antrieb des Paternosters dienenden Motoren führen können. Im übrigen sind übermäßige Unlasten auch unter Sicherheitsaspekten bedenklich. Wenn nämlich eine Seite des Paternosters ganz erheblich schwerer belastet ist als die andere Seite, so können unter Umständen auch die Brems- bzw. Arretierorgane fehlerhaft arbeiten, die den Paternoster stillsetzen bzw. -halten müssen, sobald ein gewünschter Tragsatz die Be- bzw. Entladestelle erreicht hat.

Deshalb ist es erforderlich, Paternosterlager mit Tragsätzen hoher Ladekapazität von gut ausgebildetem Personal bedienen zu lassen.

Zu den hohen Erstellungskosten können also auch hohe Unterhalts- bzw. Personalkosten hinzukommen.

Hierbei ist in der Regel noch zu berücksichtigen, daß schweres Lagergut nur vergleichsweise selten benötigt wird, gleichwohl aber vorrätig gehalten werden muß. Beispielsweise müssen in einem Ersatzteillager neben relativ häufig benötigten Verschleißteilen geringen Gewichtes auch schwere Teile vorrätig gehalten werden, die zwar nur selten und meist aufgrund nicht vorhersehbarer Ereignisse, wie Unfälle od.dgl., dann jedoch sehr dringend benötigt werden. Wenn derart unterschiedliche Lagergüter bevorratet werden müssen, können also besonders hohe Lagerkosten entstehen.

Aufgabe der Erfindung ist es nun, eine Lageranordnung zu schaffen, welche bei Beibehaltung der Vorzüge eines Paternosterlagers wesentliche Kosteneinsparungen ermöglicht.

Diese Aufgabe wird erfindungsgemäß dadurch gelöst, daß das Paternosterlager mit einem Regallager kombiniert ist, dessen Lagerebenen auf einer Längsseite des Paternosters längsseitig zu den Tragsätzen angeordnet und von der Be- bzw. Entladestelle des Paternosterlagers aus zur Einlagerung bzw. Entnahme von Lagergut mittels eines Tragsatzes, der als Besckickungstragsatz verwendet wird, sowie eines Manipulators bedienbar sind, welcher das Ladegut zwischen der jeweils vom Beschickungstragsatz angefahrenen Lagerebene und dem Beschickungstragsatz umsetzt; hierbei ist vorzugsweise vorgesehen, daß der Beschickungstragsatz auf etwa gleiches Niveau wie die jeweils anzufahrende Lagerebene einstellbar ist und das Umsetzen des Lagergutes zwischen der jeweiligen Lagerebene und dem Beschickungstragsatz im wesentlichen durch entsprechende horizontale Verschiebung erfolgt.

Die Erfindung beruht auf dem allgemeinen Gedanken, durch Kombination eines Paternosterlagers mit einem Regallager die Lagerkapazität deutlich zu erhöhen, ohne den Aufwand zur Bedienung der Lagerplätze - Tragsätze bzw. Lagerebenen - wesentlich zu erhöhen. Denn der Paternoster kann ohne weiteres auch zur Bedienung des Regallagers herangezogen werden, wenn einer der Tragsätze für die Beschickung des Regallagers herangezogen wird.

Die Erfindung bietet die besonders vorteilhafte Möglichkeit, den Beschickungstragsatz sowie die Lagerebenen des Regallagers für besonders schweres Lagergut auszunutzen, während alle übrigen Tragsätze zur Aufnahme leichteren Lagergutes dienen. Die schon aus Sicherheitsgründen relativ großen Belastungsreserven des Paternosters reichen in jedem Falle aus, wenn ein Tragsatz - der Beschickungstragsatz - gegenüber den übrigen Tragsätzen stark abweichend belastet wird. Somit besteht die Möglichkeit, ein für eine relativ geringe mittlere Belastung der Tragsätze ausgelegtes Paternosterlager mit einem Regallager zu kombinieren, dessen Lagerebenen zur Aufnahme schwerer Lasten dimensioniert sind. Die Bedienung dieser Lagerebenen mittels des Beschickungstragsatzes ist dann auch bei relativ leichter Bauweise des Paternosterlagers möglich.

Des weiteren ist vorteilhaft, daß die Lagerebenen des Regallagers mit relativ kurzen Zugriffszeiten erreichbar sind. Auch im ungünstigsten Falle liegen die Zugriffszeiten für die Lagerebenen des Regallagers nur bei einem geringen Vielfachen derjenigen Zeitspanne, die für den Umlauf des Paternosters bei der Anfahrt eines entfernteren Tragsatzes zur Be- bzw. Entladestelle benötigt wird. Zumindest ist die Zugriffszeit kurz in Anbetracht der geringen Häufigkeit, mit der das im Regallager untergebrachte Lagergut benötigt wird.

Der zum Umsetzen des Lagergutes zwischen den Lagerebenen des Regallagers und dem Beschickungstragsatz dienende Manipulator wirkt zweckmäßigerweise mit einer zur Aufnahme des Lagergutes dienenden Palette od.dgl. zusammen, auf der das Lagergut aufgenommen und eingelagert wird. Damit kann die Konstruktion des Manipulators unabhängig sein von der Art des Lagergutes.

Für die Anordnung des Manipulators bestehen grundsätzlich zwei Möglichkeiten.

Einerseits kann der Manipulator im Beschickungstragsatz untergebracht und andererseits im Regallager angeordnet werden.

Die erstere Anordnung kann Vorteile bieten, wenn ein bereits vorhandenes Regallager in erfindungsgemäßer Weise durch ein Paternosterlager erweitert werden soll.

In anderen Fällen, insbesondere wenn ein vorhandenes Paternosterlager durch ein Regallager ergänzt werden soll, ist es im allgemeinen vorteilhaft, den Manipulator im Regallager unterzubringen. Diese Konstruktion bietet den Vorzug, daß das Paternosterlager konstruktiv praktisch nicht verändert zu werden braucht und die Energieversorgung für den Antrieb des Manipulators vereinfacht wird.

In jedem Falle ist der Manipulator zweckmäßigerweise so ausgebildet, daß er Kupplungsteile besitzt, die sich mit palettenseitigen Gegenkupplungsteilen formschlüssig zur Übertragung horizontal gerichteter Kräfte in Eingriff bringen lassen, indem die Kupplungs- und Gegenkupplungsteile relativ zueinander in einer vorgegebenen Vertikalebene vertikal bewegt werden. Damit können die Kupplungs- und Gegenkupplungsteile beispielsweise in einer Vertikalebene zwischen Paternoster- und Regallager durch vertikale Bewegung des Beschickungstragsatzes miteinander gekuppelt bzw. voneinander entkuppelt werden, d.h. die Kupplungs- und Gegenkupplungselemente wirken zwangsläufig miteinander zusammen, wenn der Beschickungstragsatz eine gewünschte Lagerebene des Regallagers anfährt.

Im übrigen wird hinsichtlich bevorzugter Merkmale der Erfindung auf die Ansprüche sowie die nachfolgend erläuterten vorteilhaften Ausführungsformen verwiesen, die in der Zeichnung dargestellt sind.

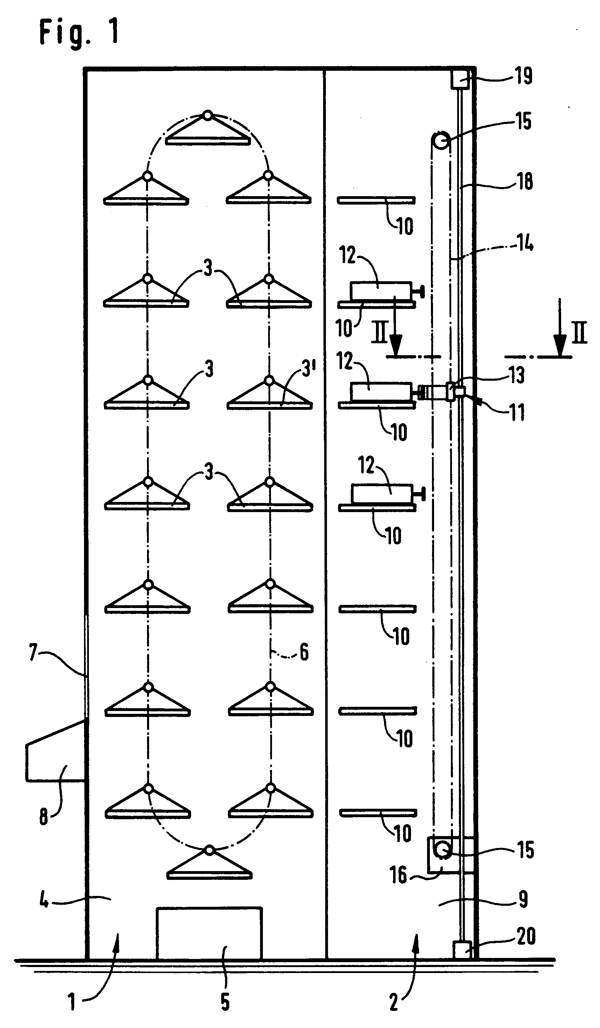

Dabei zeigt
- Fig. 1: eine schematisierte Seitenansicht einer erfindungsgemäßen Kombination von Paternoster- und Regallager,
- Fig. 2: ein Schnittbild entsprechend der Schnittebene II-II in Fig. 1,
- Fig. 3: eine schematisierte Seitenansicht entsprechend der Schnittebene III-III in Fig. 2.

Erfindungsgemäß bilden ein Paternosterlager 1 und ein Regallager 2 eine Lagerkombination, welche sich grundsätzlich wie ein herkömmliches Paternosterlager bedienen läßt.

Das Paternosterlager 1 besitzt in grundsätzlich bekannter Weise eine Vielzahl von Tragsätzen 3 für Lagergut, welche in Form eines Paternosters in einem schrank- oder käfigartigen Gehäuse 4 angeordnet sind und mittels eines motorischen Antriebes 5 auf einer ovalen Bahn 6 im Umlauf - in der Regel in Vor- und Rückwärtsrichtung - bewegt werden können, wobei die Oberseite der Tragsätze 3 immer nach oben gerichtet bleibt. Das Gehäuse 4 des Paternosterlagers 1 besitzt auf seiner Bedienungsseite eine über die gesamte Länge der Tragsätze 3 erstreckte Beschickungsöffnung 7, die zum Be- bzw. Entladen vom jeweils gewünschten Tragsatz 3 angefahren wird. Dazu kann der jeweils gewünschte Tragsatz durch entsprechende Befehlseingabe an einem Steuerpult 8 od.dgl. abgerufen werden, über das der Antrieb 5 entsprechend gesteuert wird.

Auf der von der Beschickungsöffnung 7 abgewandten offenen Rückseite schließt das Gehäuse 4 des Paternosterlagers 1 an das zu dieser Seite ebenfalls offene Gehäuse 9 des Regallagers 2 an. Dieses letztere Gehäuse 9 kann ebenfalls schrank- bzw. käfigartig ausgebildet sein. Gegebenenfalls können die Gehäuse 4 und 9 auch eine Einheit bilden.

Das Regallager 2 besitzt eine Vielzahl von vertikal übereinander angeordneten Lagerebenen 10 für Lagergut.

Erfindungsgemäß ist nun vorgesehen, diese Lagerebenen 10 von der Beschickungsöffnung 7 des Paternosterlagers 1 aus zu bedienen, d.h. mit dem Lagergut zu beschicken bzw. das auf den Lagerebenen 10 abgelegte Lagergut zur Beschickungsöffnung 7 zurückzubringen.

Zu diesem Zweck ist erfindungsgemäß vorgesehen, daß einer der Tragsätze 3 des Paternosterlagers als Beschickungstragsatz 3' verwendet wird, welcher das Lagergut von der Beschickungsöffnung 7 zu einer der Lagerebenen 10 bzw. von dort zurück zur Beschickungsöffnung 7 transportiert.

Der Beschickungstragsatz 3' vermag durch entsprechende Steuerung des Antriebes 5 des Paternosterlagers 1 jede der Lagerebenen 10 anzufahren, d.h. in unmittelbarer Nähe der jeweils gewünschten Lagerebene 10 in etwa gleicher Höhe wie diese Ebene anzuhalten.

Mittels eines Manipulators 11 kann dann das Lagergut zwischen dem Beschickungstragsatz 3' und der jeweiligen Lagerebene 10 umgesetzt werden.

Um das Umsetzen des Lagergutes zwischen dem Beschickungstragsatz 3' und den Lagerebenen 10 zu erleichtern, ist zweckmäßigerweise vorgesehen, das Lagergut auf Paletten 12 od.dgl. Tragteile zu lagern, so daß der Manipulator 11 lediglich mit den Paletten 11 od.dgl. zusammenzuwirken braucht.

Der Manipulator 11 besitzt einen auf der vom Paternosterlager 1 abgewandten Längsseite der Lagerebenen 10 des Regellagers 2 längsseitig zu den Lagerebenen 10 angeordneten Träger 13, dessen Enden an zwei Ketten 14 od.dgl. befestigt sind, die jeweils über stationär drehgelagerte Kettenräder 15 umlaufend angeordnet sind. Dabei sind die unteren Kettenräder 15 unterhalb der untersten Lagerebene 10 und die oberen Kettenräder 15 oberhalb der obersten Lagerebene 10 des Regallagers 2 angeordnet, derart, daß der Träger 13 durch entsprechenden Umlauf der Ketten 14 im Bereich sämtlicher Lagerebenen 10 vertikal verstellt werden kann. Die vertikale Verstellung des Trägers 13 erfolgt mittels eines die beiden unteren Kettenräder 15 antreibenden Elektromotors 16.

Am Träger 13 ist ein erstes Zahnrad 17 mit vertikaler Achse drehgelagert, welches mittels einer im Querschnitt unrunden Mittelöffnung auf einer vertikalen Welle 18 mit angepaßtem bzw. gleichartig unrundem Querschnitt drehfest, jedoch axial verschiebbar angeordnet ist. Die Welle 18, die an ihren oberen und unteren Enden in stationären Lagern 19 radial und axial gelagert ist, wird mittels eines weiteren Elektromotors 20 angetrieben, so daß sich das genannte Zahnrad 17 am Träger 13 in jeder Höhenlage des Trägers 13 motorisch drehen läßt.

Das Zahnrad 17 kämmt mit zwei weiteren am Träger 13 angeordneten Zahnrädern 21, die drehfest mit am Träger 13 drehgelagerten Spindeln 22 verbunden sind. Bei Drehung des Zahnrades 17 drehen sich die beiden Zahnräder 21 und dementsprechend auch die beiden Spindeln 22 in entgegengesetzten Richtungen, so daß mit den Spindeln 22 antriebsverbundene Schieber 23, die am Träger 13 in dessen Längsrichtung verschiebbar geführt sind, in einander entgegengesetzten Richtungen linear verschoben werden.

An den Schiebern 23 sind scherenartig miteinander verbundene Lenker 24 angelenkt, derart, daß die von den Lenkern 24 gebildete Schere nur in einer Horizontalebene beweglich ist. Die von den jeweils zugeordneten Schiebern 23 entfernten Enden der Lenker 24 sind gelenkig mit weiteren Schiebern 25 verbunden, die an einer zum Träger 13 parallelen Schiene 26, die auf der dem Paternosterlager 1 zugewandten Seite des Trägers 13 angeordnet ist, verschiebbar geführt sind. Die Schiene 26 sowie die Schieber 25 und die Gelenke zwischen diesen Schiebern 25 und den Lenkern 24 sind so ausgebildet, daß die Schiene 26 behüglich ihrer Längsachse kippfest gehaltert wird.

Aufgrund der dargestellten Anordnung vermag der Elektromotor 20, welcher über die Welle 18 das Zahnrad 17 und damit über die Zahnräder 21 und die Spindeln 22 die Schieber 23 antreibt, die Schiene 26 in Querrichtung zum Träger 13 zu verschieben, und zwar derart, daß die Schiene 26 eine erste Endlage auf der vom Paternosterlager 1 abgewandten Seite der Lagerebenen 10 des Regallagers 2 und eine zweite Endlage auf der dem Paternosterlager 1 zugewandten Seite der Lagerebenen 10 - innerhalb des zwischen den Tragsätzen 3 und den Lagerebenen 10 verbleibenden Abstandsraumes - zu erreichen vermag. In der ersten Endlage der Schiene 26 läßt sich der Träger 13 mittels des Elektromotors 16 vertikal verstellen. Sobald der Träger 13 dann eine Lage dicht oberhalb des Niveaus einer der Lagerebenen 10 erreicht hat, kann dann die Schiene 26 in Richtung des Paternosterlagers 1 bzw. in entgegengesetzter Richtung verstellt werden.

Auf der dem Paternosterlager 1 zugewandten Seite der Schiene 26 sind Kupplungsklauen 27 fest angeordnet, die sich in vertikaler Richtung in Gegenkupplungsklauen 28 einkuppeln bzw. von denselben entkuppeln lassen, die ihrerseits fest auf der dem Träger 16 zugewandten Längsseite der Paletten 12 od.dgl. angeordnet sind. Die dargestellte Anordnung funktioniert in folgender Weise:

Zunächst wird das Umsetzen einer Palette 12 von einer der Lagerebenen 10 in den Beschickungstragsatz 3' erläutert.

Der Beschickungstragsatz 3' fährt die gewünschte Lagerebene 10 an und hält in einer Position längsseitig dieser Lagerebene auf etwa gleicher Höhe.

Gleichzeitig oder nachfolgend wird der Träger 13 mit der in ihrer ersten Endlage befindlichen Schiene 26 auf eine Höhe dicht oberhalb dieser gewünschten Lagerebene 10 eingestellt. Dabei fahren die Kupplungsklauen 27 in vertikaler Richtung durch die Gegenkupplungsklauen 28 von aus den Lagerebenen 10 im Bereich des vertikalen Verschiebeweges des Trägers 13 abgestellten Paletten 12 hindurch und werden zwangsläufig in die Gegenkupplungsklauen 28 der auf der gewünschten Lagerebene 10 abgestellten Palette 12 eingekuppelt. Damit sind die Kupplungsklauen 27 mit den Gegenkupplungsklauen 28 der letztgenannten Palette 12 in Horizontalrichtung quer zur Längsrichtung des Trägers 13 bzw. der Schiene 26 formschlüssig verbunden.

Nunmehr wird der Elektromotor 20 in Betrieb gesetzt, derart, daß sich die Schiene 26 in Richtung des Paternosterlagers 1 seitwärts verschiebt, wobei die Palette 12 in den Beschickungstragsatz 3' geschoben wird. Das Umsetzen der Palette 12 von der jeweiligen Lagerebene 10 in den Beschickungstragsatz 3' ist abgeschlossen, sobald die Schiene 26 ihre zweite Endlage erreicht hat, in der die Kupplungsklauen 27 sowie die Gegenkupplungsklauen 28 eine Lage etwas neben der dem Regallager 2 zugewandten Seite des Beschickungstragsatzes 3 erreicht haben.

Nunmehr wird der Beschickungstragsatz 3' auf der Bahn 6 zur Beschickungsöffnung 7 gefahren, wobei die Kupplungsklauen 27 von den Gegenkupplungsklauen 28 zwangsläufig entkuppelt werden, weil der Beschickungstragsatz 3' zunächst eine reine Vertikalbewegung in Aufwärts- oder Abwärtsrichtung ausführt.

Wenn nunmehr die im Beschickungstragsatz 3' befindliche Palette 12 wieder auf die freie Lagerebene 10 umgesetzt werden soll, fährt der Beschickungstragsatz 3 zu dieser Lagerebene zurück, wobei der Beschickungstragsatz 3' an dieser Lagerebene 10 bereits von der auf ihre zweite Endlage eingestellten Schiene 26 "erwartet" wird. Dementsprechend werden die Gegenkupplungsklauen 28 der im Beschickungstragsatz 3' befindlichen Palette 12 zwangsläufig vertikal in die Kupplungsklauen 27 der Schiene 26 eingekuppelt, die dann nachfolgend in ihre erste Endlage bewegt wird und dabei die Palette 12 auf die jeweilige Lagerebene 10 zieht.

Unabhängig davon, ob die Schiene 26 ihre erste oder zweite Endlage einnimmt, kann das Paternosterlager 1 zur Beschickung seiner Tragsätze 3 beliebig bedient werden. Soweit sich dabei die Schiene 26 in ihrer zweiten an das Paternosterlager 1 angenäherten Endlage befindet und im Beschickungstragsatz 3' eine Palette 12 aufgenommen ist, wird der Umlauf der Tragsätze 3 auf der Bahn 6 in keiner Weise behindert, weil die Gegenkupplungsklauen 28 der Palette 12 vertikal durch die Kupplungsklauen 27 an der Schiene 26 hindurchlaufen können.

Auch die Vertikalverstellung des Trägers 13 mit der in erster Endlage auf der vom Paternosterlager 1 abgewandten Seite der Lagerebenen 10 befindlicher Schiene 26 kann durch die Gegenkupplungsklauen 28 der auf den Lagerebenen 10 befindlichen Paletten 12 in keiner Weise behindert werden, weil die Kupplungsklauen 27 der Schiene 26 in vertikaler Richtung zwanglos durch die über die entsprechenden Ränder der Lagerebenen 10 überstehenden Gegenkupplungsklauen 28 der Paletten 12 hindurchlaufen.

Abweichend von der dargestellten Anordnung kann der Elektromotor 20 auch unmittelbar am Träger 13 angeordnet sein, wobei die Stromzuführung vorzugsweise ohne Schleifkontakte u.dgl. über Kabel erfolgt, die beispielsweise von der Oberseite des Gehäuses 9 des Regallagers 2 herabhängen.

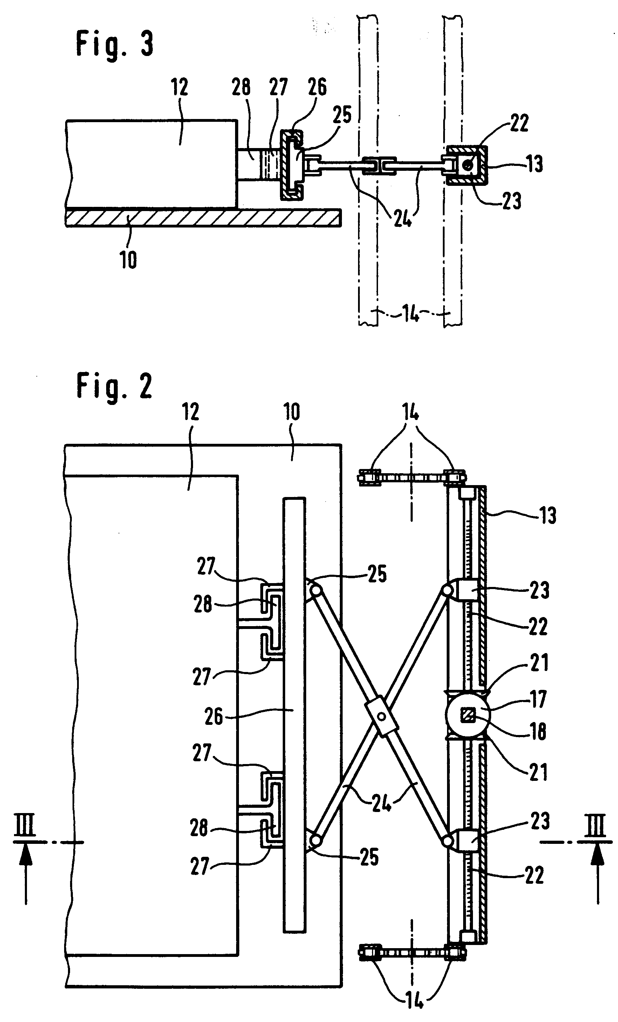

Im übrigen ist es grundsätzlich auch möglich, den Manipulator 11 nicht im Regallager 2, sondern im Beschickungstragsatz 3' anzuordnen. Beispielsweise kann der Träger 13 als Teil des Beschickungstragsatzes 3' bzw. mit dem Beschickungstragsatz 3' fest verbunden angeordnet sein, so daß die Schiene 26 vom Beschickungstragsatz 3' aus bewegt wird. Bei dieser Anordnung ist es lediglich erforderlich, daß die Gegenkupplungsklauen 28 an den Paletten 12 od.dgl. gegenüber der Darstellung in Fig. 2 auf der gegenüberliegenden Seite der Paletten 12 angeordnet sind, um mit den Kupplungsklauen 27 zusammenwirken zu können. Das Kuppeln und Entkuppeln der Kupplungsklauen 27 mit den Gegenkupplungsklauen 28 erfolgt dann ausschließlich durch vertikale Bewegung des Beschickungstragsatzes 3'.

Auch wenn die Anordnung des Manipulators 11 im Beschickungstragsatz 3' hinsichtlich der Energiezuführung zum Manipulator komplizierter ist und in der Regel bei Verwendung von Elektromotoren zum Antrieb des Manipulators Schleifkontakte benötigt werden, kann diese Anordnung dann vorteilhaft sein, wenn ein bereits vorhandenes Regallager 2 nachträglich in der oben erläuterten Weise mit einem Paternosterlager 1 kombiniert wird.

## Patentansprüche

1. Lageranordnung für Lagergut mit zumindest einem Paternosterlager (1), welches mehrere Tragsätze (3) für Lagergut aufweist, die als Teile eines umlaufend beweglichen Paternosters angeordnet und an einer durch Umlauf des Paternosters erreichbaren Be- bzw. Entladestelle (7) des Paternosterlagers be- bzw. entladbar sind,
dadurch gekennzeichnet,
daß das Paternosterlager (1) mit einem Regallager (2) kombiniert ist, dessen Lagerebenen (10) auf einer Längsseite des Paternosters längsseitig zu den Tragsätzen (3) angeordnet und von der Be- bzw. Entladestelle (7) des Paternosterlagers aus zur Einlagerung bzw. Entnahme von Lagergut mittels eines der Tragsätze (3), der als Beschickungstragsatz (3') verwendet wird, sowie eines Manipulators (11) bedienbar sind, welcher das Ladegut zwischen der jeweils vom Beschickungstragsatz (3') angefahrenen Lagerebene (10) und dem Beschickungstragsatz (3') umsetzt.

2. Lageranordnung nach Anspruch 1, dadurch gekennzeichnet, daß der Beschickungstragsatz (3') auf etwa gleiches Niveau wie die jeweils anzufahrende Lagerebene (10) einstellbar ist und das Umsetzen des Lagergutes zwischen der jeweiligen Lagerebene (10) und dem Beschickungstragsatz (3') im wesentlichen durch entsprechende horizontale Verschiebung erfolgt.

3. Lageranordnung nach Anspruch 1 oder 2,
dadurch gekennzeichnet, daß der Beschickungstragsatz (3') sowie Lagerebenen (10) hoch belastbar bzw. höher belastbar als die übrigen Tragsätze (3) sind.

4. Lageranordnung nach einem der Ansprüche 1 bis 3,
dadurch gekennzeichnet, daß der Manipulator (11) mit zwischen Beschickungstragsatz (3') und den Lagerebenen (10) verschiebbaren Paletten (12), Lagergutaufnahmen od.dgl. zusammenwirkt.

5. Lageranordnung nach Anspruch 4, dadurch gekennzeichnet, daß Manipulator (11) und Paletten (12) od.dgl. miteinander zusammenwirkende Kupplungs- und Gegenkupplungsteile (27,28) besitzen, welche sich durch Relativbewegung zueinander in Vertikalrichtung kuppeln und entkuppeln lassen und in gekuppeltem Zustand nur in horizontaler Richtung formschlüssig miteinander verbunden sind.

6. Lageranordnung nach Anspruch 4 oder 5,
dadurch gekennzeichnet, daß mit Gegenkupplungsteilen (28) an den Paletten (12) od.dgl. verbindbare Kupplungsteile (27) des Manipulators (11) auf der vom Paternosterlager (1) abgewandten Seite der Lagerebenen (10) des Regallagers (2) vertikal und auf den Niveaus der Lagerebenen (10) horizontal verschiebbar sind.

7. Lageranordnung nach den Ansprüchen 5 und 6,
dadurch gekennzeichnet, daß sich die manipulatorseitigen Kupplungsteile (27) horizontal bis in eine Lage im Abstandsraum zwischen den Lagerebenen (10) und den Tragsätzen (3) vorschieben lassen, derart, daß die Gegenkupplungsteile (28) einer im Beschickungstragsatz (3') befindlichen Palette (12) od.dgl. durch Vertikalbewegung des Beschickungstragsatzes (3') in die Kupplungsteile (27) eingekuppelt bzw. aus den Kupplungsteilen (27) ausgekuppelt werden können.

8. Lageranordnung nach einem der Ansprüche 1 bis 7,
dadurch gekennzeichnet, daß der Manipulator (11) einen auf der vom Paternosterlager (1) abgewandten Seite der Lagerebenen (10) vertikal verstellbaren Balken bzw. Träger (13) aufweist, welcher sich in Längsrichtung der Lagerebenen (10) bzw. Tragsätze (3) erstreckt, und daß am genannten Balken bzw. Träger (13) ein dazu paralleler weiterer Balken (26) od.dgl. in Querrichtung horizontal verstellbar angeordnet ist, welcher die Kupplungsteile (27) trägt.

9. Lageranordnung nach Anspruch 8, dadurch gekennzeichnet, daß der erste Balken bzw. Träger (13) an seinen Enden an umlaufend geführten Ketten od.dgl. (14) gehaltert ist.

10. Lageranordnung nach Anspruch 8 oder 9,
dadurch gekennzeichnet, daß ein zum Regallager (2) stationärer Motor (20) mittels einer senkrechten Welle (18) mit unrundem Querschnitt ein am ersten Balken bzw. Träger (13) drehgelagertes, auf der genannten Welle (18) axial verschiebbar und drehfest angeordnetes Eingangselement (17) antreibt, welches seinerseits die Kupplungsteile (27) des Manipulators (11) bzw. den diese Kupplungsteile tragenden weiteren Balken (26) od.dgl. antreibt.

11. Lageranordnung nach einem der Ansprüche 1 bis 10, dadurch gekennzeichnet, daß der Manipulator (11) im Beschickungstragsatz (3') angeordnet ist.

## Claims

1. Storage arrangement for stored goods with at least one paternoster store (1) comprising several carrying means (3) for stored goods which are arranged as parts of a revolving paternoster and can be loaded and unloaded at a loading or unloading station (7) of the paternoster store attainable by rotating the paternoster, characterised in that the paternoster store (1) is combined with a shelved store (2) of which the storage planes (10) are arranged on one longitudinal side of the paternoster alongside the carrying means (3) and can be operated from the loading or unloading station (7) of the paternoster store for the storage or removal of stored goods by means of one of the carrying means (3) which is used as a charging carrying means (3') and of a manipulator (11) which transfers the stored goods between the respective storage plane (10) approached by the charging carrying means (3') and the charging carrying means (3').

2. Storage arrangement according to claim 1, characterised in that the charging carrying means (3') is adjustable to substantially the same level as the respective storage plane (10) to be approached and transfer of the stored goods between the respective storage plane (10) and the charging carrying means (3') is carried out essentially by corresponding horizontal displacement.

3. Storage arrangement according to claim 1 or 2, characterised in that the charging carrying means (3') and storage planes (10) can be highly stressed or can be more highly stressed than the other carrying means (3).

4. Storage arrangement according to one of claims 1 to 3, characterised in that the manipulator (11) cooperates with pallets (12), stored product holders or the like which are displaceable between charging carrying means (3') and the storage planes (10).

5. Storage arrangement according to claim 4, characterised in that manipulator (11) and pallets (12) or the like have mutually cooperating coupling or counter-coupling members (27, 28) which can be vertically coupled and uncoupled by relative movement and are only positively connected to one another horizontally in the coupled state.

6. Storage arrangement according to claim 4 or 5, characterised in that coupling members (27) of the manipulator (11) which can be connected to the pallets (12) or the like by counter-coupling members (28) are vertically displaceable on the side of the storage planes (10) of the shelved store (2) remote from the paternoster store (1) and are horizontally displaceable at the levels of the storage planes (10).

7. Storage arrangement according to claims 5 and 6, characterised in that the manipulator-side coupling members (27) can be advanced horizontally into a position in the space between the storage planes (10) and the carrying means (3) in such a way that the counter-coupling members (28) of a pallet (12) located in the charging carrying means (3') or the like can be coupled into the coupling members (27) or uncoupled from the coupling members (27) by vertical movement of the charging carrying means (3').

8. Storage arrangement according to one of claims 1 to 7, characterised in that the manipulator (11) has a beam or girder (13) which is vertically adjustable on the side of the storage planes (10) remote from the paternoster (1) and extends in the longitudinal direction of the storage planes (10) or carrying means (3) and in that on said beam or girder (13) a further beam (26) or the like which is parallel thereto and carries the coupling members (27) is arranged so as to be transversely horizontally adjustable.

9. Storage arrangement according to claim 8, characterised in that the first beam or girder (13) is mounted on encircling chains or the like (14) at its ends.

10. Storage arrangement according to claim 8 or 9, characterised in that a motor (20) which is stationary relative to the shelved store (2) drives a input element (17) by means of a vertical shaft (18) having a non-round cross section, the input element (17) being rotatably mounted on the first beam or girder (13), being axially displaceable on said shaft (18), being non-rotatably arranged and, in turn, driving the coupling members (27) of the manipulator (11) or the further beam (26) or the like carrying these coupling members.

11. Storage arrangement according to one of claims 1 to 10, characterised in that the manipulator (11) is arranged in the charging carrying means (3').

## Revendications

1. Dispositif de stockage pour des marchandises à stocker, comprenant au moins un magasin paternoster (1), lequel présente plusieurs éléments porteurs (3) qui sont agencés comme des parties d'un paternoster se déplaçant en cercle fermé et peuvent être chargés ou déchargés en un point (7) de chargement ou de déchargement du magasin paternoster accessible par mise en circulation du paternoster, caractérisé en ce que le magasin paternoster (1) est combiné à un magasin à étagères (2), dont les plans de, stockage (10) sont disposés sur un côté longitudinal du paternoster dans le sens de la longueur des éléments porteurs (3) et peuvent, depuis le point (7) de chargement ou déchargement du magasin paternoster, être desservis au moyen de l'un des éléments porteurs (3), qui est utilisé comme élément porteur de chargement (3'), ainsi que d'un manipulateur (11), pour déposer ou prélever des marchandises de stockage, lequel manipulateur (11) transfère la marchandise de stockage entre le plan de stockage (10) atteint par l'élément porteur de chargement (3') et l'élément porteur de chargement (3').

2. Dispositif de stockage selon la revendication 1, caractérisé en ce que l'élément porteur de chargement (3') peut être amené approximativement au même niveau que le plan de stockage (10) à atteindre, et le transfert de la marchandise de stockage entre le plan de stockage (10) respectif et l'élément porteur de chargement (3') se fait pour l'essentiel par un déplacement horizontal correspondant.

3. Dispositif de stockage selon la revendication 1 ou 2, caractérisé en ce que l'élément porteur de chargement (3') et les plans de stockages (10) résistent à des charges élevées, ou plus élevées que les autres éléments porteurs (3).

4. Dispositif de stockage selon l'une des revendications 1 à 3, caractérisé en ce que le manipulateur (111) coopère avec des palettes (12), des réceptacles de marchandise de stockage, ou analogues, mobiles entre l'élément porteur de chargement (3') et les plans de stockage (10).

5. Dispositif de stockage selon la revendication 4, caractérisé en ce que le manipulateur (11) et les palettes (12) ou analogues possèdent des pièces de couplage et de contre-couplage (27,28) coopérant entre eues, qui se couplent et se découplent les unes des autres par un mouvement relatif dans la direction verticale et qui, à l'état accouplé, ne sont reliées entre elles en engagement positif que dans la direction verticale.

6. Dispositif de stockage selon la revendication 4 ou 5, caractérisé en ce que les parties de couplage (27) du manipulateur (11) se liant à des parties de contre-couplage (28) sur les palettes (12) ou analogues peuvent se déplacer verticalement du côté des plans de stockage (10) du magasin à étagères (2) qui est opposé au magasin paternoster (1) et horizontalement sur le niveau des plans de stockage (10).

7. Dispositif de stockage selon les revendications 5 et 6, caractérisé en ce que les parties de couplage (27) côté manipulateur peuvent être avancées horizontalement jusqu'en à position dans l'interstice entre les plans de stockage (10) et les éléments porteurs (3), de telle sorte que les parties de contre-couplage (28) d'une palette (12) ou analogue se trouvant sur l'élément porteur de chargement (3') peuvent, par mouvement vertical de l'élément porteur de chargement (3'), être accouplées aux parties de couplage (27) ou découplées des parties de couplage (27).

8. Dispositif de stockage selon l'une des revendications 1 à 7, caractérisé en ce que le manipulateur (11) présente, du côté des plans de stockage (10) opposé au magasin paternoster (1), une poutre ou un support (13) vertical qui s'étend dans la direction longitudinale des plans de stockage (10), et en ce que, sur ladite poutre ou ledit support (13), une autre poutre (26) ou analogue, parallèle à la première, est placée transversalement et mobile horizontalement, qui porte les parties de couplage (27).

9. Dispositif de stockage selon la revendication 8, caractérisé en ce que la première poutre ou support (13) est maintenues à ses extrémités sur des chaînes ou analogues (14) circulant en cercle fermé.

10. Dispositif de stockage selon la revendication 8 ou 9, caractérisé en ce qu'un moteur (20) stationnaire par rapport au magasin à étagères (2) entraîne, au moyen d'un arbre vertical (18) de section non circulaire, un élément d'entrée (17) soutenu en rotation par la première poutre ou support (13), mobile axialement et monté solidaire en rotation sur ledit arbre (18), lequel élément entraîne quant à lui les parties de couplage (27) du manipulateur (11) ou l'autre poutre (26) portant ces parties de couplage (27).

11. Dispositif de stockage selon l'une des revendications 1 à 10, caractérisé en ce que le manipulateur (11) est placé dans l'élément porteur de chargement (3').
